# FASCICULE DE BREVET EUROPEEN

(11) **EP 2 550 135 B1**
(45) Date de publication et mention de la délivrance du brevet: **21.10.2015**
(21) Numéro de dépôt: 11717515.8
(22) Date de dépôt: 24.03.2011
(51) Int. Cl.: A01G 3/037, B26B 15/00

(54) **DISPOSITIF DE CONTRÔLE POSITIONNEL DE DEUX ELEMENTS L'UN PAR RAPPORT A L'AUTRE TEL QUE LAMES D'OUTILS DE COUPE DU GENRE SECATEUR ET OUTIL DE COUPE LE COMPORTANT**
VORRICHTUNG ZUR STEUERUNG DER RELATIVEN POSITIONIERUNG VON ZWEI ELEMENTEN, WIE ETWA DEN KLINGEN EINES SCHNEIDWERKZEUGS VOM ROSENSCHERENTYP SOWIE SCHNEIDWERKZEUG DAMIT
DEVICE FOR CONTROLLING THE RELATIVE POSITIONING OF TWO ELEMENTS, SUCH AS THE BLADES OF SECATEUR-TYPE CUTTING TOOLS, AND A CUTTING TOOL COMPRISING SAME

(30) Priorité: 24.03.2010 FR 1001185
(43) Date de publication de la demande: 30.01.2013
(73) Titulaire: Infaco SAS, 81140 Cahuzac Sur Vère (FR)
(72) Inventeur: DELMAS, Daniel, F-81140 Cahuzac Sur Vère (FR)
(74) Mandataire: Cornuejols, Georges
(86) Numéro de dépôt international: PCT/EP2011/054513
(87) Numéro de publication internationale: WO 2011/117335

(56) Documents cités:
- EP-A1- 1 574 125
- FR-A1- 2 935 868

## Description

### Domaine technique

La présente invention est du domaine des dispositifs utilisés pour le contrôle positionnel de deux éléments en mouvement relatif l'un par rapport à l'autre, dont un est fixe et l'autre mobile et motorisé, en vue de déterminer à chaque instant leurs positions respectives et agir en conséquence sur le miyen d'entraînement de l'élément mobile, ce moyen pouvant être un motoréducteur d'entraînement. Plus particulièrement, et non limitativement, la présente invention est appliquée au contrôle positionnel des lames de coupe d'un outil qui peut être du type électroportatif comme par exemple un sécateur de taille de la vigne, et autres outils de taille utilisés dans le domaine agricole ou industriel.

### État de la technique antérieure.

On connaît de l'état de la technique, divers dispositifs de contrôle tant du mouvement des lames de coupe que de leurs positions relatives l'une par rapport à l'autre.

Typiquement les sécateurs électro portatif du type de ceux utilisés pour la taille de la vigne, le recépage et autres travaux agricoles, comprennent une première lame ou crochet, installée fixement sur le bâti de l'outil et une seconde lame, mobile par rapport à la précédente et ce entre une position de fermeture et une position d'ouverture et inversement. Cette position d'ouverture peut être au choix de l'utilisateur, une position de pleine ouverture ou bien une position dite de demi-ouverture intermédiaire entre la position de pleine ouverture et la position de fermeture. Habituellement, la lame mobile est équipée d'une crémaillère en arc de circonférence de cercle avec laquelle est engrené un pignon d'entraînement en prise avec l'arbre de sortie d'un moto-réducteur électrique installé dans le manche de l'outil.

Les dispositifs connus, pour le contrôle des positions respectives des lames de coupe, sont habituellement constitués par des capteurs potentiométriques équipés chacun d'un curseur mécaniquement lié à la lame mobile. La valeur de la tension en sortie est représentative de la position angulaire des deux lames l'une par rapport à l'autre. L'inconvénient de cette disposition est qu'elle met en oeuvre des capteurs pourvus d'éléments mobiles et fixes en contact les uns avec les autres et par voie de conséquence soumis à usure.

On connaît aussi des sécateurs comprenant en regard de la trajectoire d'un aimant porté par la crémaillère de la lame mobile, une série de capteurs à effet Hall disposés à intervalle régulier le long d'un arc de circonférence de cercle. Les capteurs à effet Hall délivrent chacun, lorsque l'aimant est à proximité, une information représentative de la position angulaire de la lame mobile par rapport à la lame fixe. L'avantage de cette disposition réside dans le fait que des positions intermédiaires de la lame mobile peuvent être repérées et signalées ce qui permet de définir des positions de demi-ouvertures. Cependant, cette solution en raison de la mise en oeuvre plusieurs capteurs à effet Hall est coûteuse et ne permet pas de déterminer des positions de demi-ouvertures autres que celles matérialisées par lesdits capteurs.

D'autres sécateurs électriques sont notamment connus du EP 1 574 125 et du FR 2 935 868.

Outre les inconvénients précités, aucun sécateur de l'art antérieur n'est doté de moyens simple et peu coûteux permettant de définir des positions de croisement de lame pour compenser l'usure de ces dernières, et de moyens pour identifier de manière automatique et simple le type de lame monté sur l'outil de coupe.

### Exposé de l'Invention

La présente invention a donc pour objet de résoudre les problèmes sus évoqués.

À cet effet le dispositif de contrôle positionnel de deux éléments (22, 23) l'un par rapport à l'autre, par exemple les lames d'un outil de coupe du genre sécateur, dont un (23) est fixe et l'autre (22) mobile et connecté mécaniquement à un organe motoréducteur (21) afin d'être entraîné par ce dernier le long d'une trajectoire préétablie, la position dudit organe mobile (22) étant asservie à la position d'un organe de commande (24) tel qu'une gâchette, ledit dispositif comportant un bâti auquel est fixé l'élément fixe (23), se caractérise essentiellement en ce qu'il comprend un circuit de commande (3) de l'organe motoréducteur (21), un premier capteur à effet Hall fixe (40), connecté au circuit de commande (3), installé fixement par rapport au bâti, apte à matérialiser avec un aimant permanent droit (41), porté par l'élément mobile (22), une position d'écartement nul ou négatif des deux éléments (22, 23) et un second capteur à effet Hall (42), connecté au circuit de commande (3), installé fixement par rapport au bâti, apte à matérialiser avec un aimant permanent droit porté par l'élément mobile (22) une position d'écartement maximal des deux éléments, que l'aimant (41) est positionné en sorte que son axe nord-sud soit perpendiculaire à sa trajectoire, que le premier capteur (40) est disposé dans une zone selon laquelle le vecteur champ magnétique de ce premier aimant présente une composante perpendiculaire audit axe nord-sud, ledit premier capteur (40) par sa face sensible étant parallèle à l'axe nord-sud de l'aimant associé (41) et est apte à donner deux informations de position, à savoir abscisse et ordonnée, de l'aimant (41) associé, dans un repère cartésien fixe par rapport audit capteur et que ce dernier intègre deux cellules à effet Hall formant un angle entre elles, les dites cellules par leurs faces sensibles étant parallèles à l'axe nord-sud de l'aimant associé (41) et que la valeur de l'écartement minimal ou négatif entre l'élément mobile (22) et l'élément fixe (23) est ajustable.

Ces dispositions, s'agissant d'un sécateur permet ainsi, en position de fermeture des lames, de définir leur degré de croisement en ajustant la valeur de leur écart négatif. De plus, elles sont propres à améliorer la précision du positionnement des deux éléments fixe et mobile lorsque l'écart entre ces derniers est faible.

Selon une autre caractéristique de l'invention, le dispositif comporte deux aimants dont un est fonctionnellement associé au premier capteur à effet Hall et dont l'autre est fonctionnellement associé au second capteur à effet Hall, les dits aimants étant portés tous deux par l'élément mobile.

Selon une autre caractéristique de l'invention, les deux aimants sont disposés sur des trajectoires différentes de façon que chaque capteur à effet Hall ne puisse pas être influencé par le champ magnétique de l'aimant fonctionnellement associé à l'autre capteur.

Selon une autre caractéristique de l'invention, l'organe de commande porte un aimant déplaçable en regard d'un capteur à effet Hall occupant une position fixe par rapport à l'élément fixe, ledit capteur à effet Hall étant connecté au circuit de commande et étant apte à mesurer en continu le champ magnétique de l'aimant et émettre un signal représentatif de la position angulaire instantanée de l'organe de commande, ledit circuit de commande étant apte à asservir la position de l'élément mobile à la position de l'organe de commande.

Selon une autre caractéristique de l'invention, le capteur à effet Hall fonctionnellement associé à l'aimant de l'organe de commande, comprend deux cellules à effet Hall formant un angle entre elles et est apte à donner deux informations de distance, telles qu'abscisse et ordonnée, de la position de l'aimant dans un repère cartésien fixe par rapport au dit capteur.

Selon une autre caractéristique de l'invention, le motoréducteur de l'élément mobile est commandé en courant par le circuit de commande et ledit circuit pilote ledit motoréducteur par l'intermédiaire d'un pilotage par hacheur.

Selon une autre caractéristique de l'invention, le circuit de commande émet un signal d'alimentation du motoréducteur électrique et est adapté à effectuer une mesure de vitesse du motoréducteur par traitement de ce signal d'alimentation.

Selon une autre caractéristique de l'invention, le circuit de commande est apte à intégrer la mesure de vitesse par rapport au temps afin d'obtenir une distance parcourue et par voie de conséquence la position de l'élément mobile par rapport à l'élément fixe.

Selon une autre caractéristique de l'invention, le circuit de commande est adapté à comparer la dite position instantanée avec une valeur de consigne qui dépend du signal délivré par le capteur à effet Hall associé à l'organe de commande.

L'invention a également pour objet un outil de coupe électroportatif comportant une lame de coupe fixe et une lame de coupe mobile actionnée par un motoréducteur électrique à partir de l'action sur une gâchette. Cet outil de coupe se caractérise essentiellement en ce qu'il comprend un dispositif de contrôle positionnel selon l'invention.

Selon une autre caractéristique de l'outil de coupe, la lame mobile comprend une crémaillère et les aimants fonctionnellement associés aux premier et second capteurs à effet Hall sont portés par la crémaillère.

Selon une autre caractéristique de l'outil de coupe, le circuit de commande est apte à détecter le type de lame par mesure de l'amplitude du mouvement de la lame mobile entre sa position de pleine ouverture et sa position de fermeture lors de la première coupe, l'écart angulaire entre les deux aimants étant significatif du type de lame utilisé.

Selon une autre caractéristique de l'outil de coupe, est prévue une position de demi-ouverture des lames de coupe, paramétrable, ladite position étant définie lors d'une phase d'initialisation et étant mémorisée et comparée par le circuit de contrôle à la position calculée de la lame mobile, ledit circuit commandant l'arrêt du motoréducteur lorsque la position de demi-ouverture est atteinte.

Selon une autre caractéristique de l'invention, le circuit de commande est apte à comptabiliser séparément le nombre total de coupes réalisées et le nombre de coupe ayant conduit à un blocage des lames et à traiter statistiquement ces deux valeurs pour donner une information relative au degré d'usure des lames.

### Description sommaire des figures et des dessins.

D'autres avantages, buts et caractéristiques de l'invention apparaîtront à la lecture de la description d'une forme préférée de réalisation donnée à titre d'exemple non limitatif en se référant aux dessins annexés en lesquels :
- la figure 1 est une vue d'un schéma illustrant le principe général d'une cellule à effet Hall,
- la figure 2 est une vue schématique du dispositif selon l'invention associé à un outil coupant du genre sécateur,
- la figure 3 montre le positionnement du premier capteur de fermeture par rapport aux lignes de champ de l'aimant associé,
- la figure 4 est une vue de détail du circuit de commande,
- les figures 5 à 8 montrent divers type de lames mobiles.

### Meilleure manière de réaliser l'invention

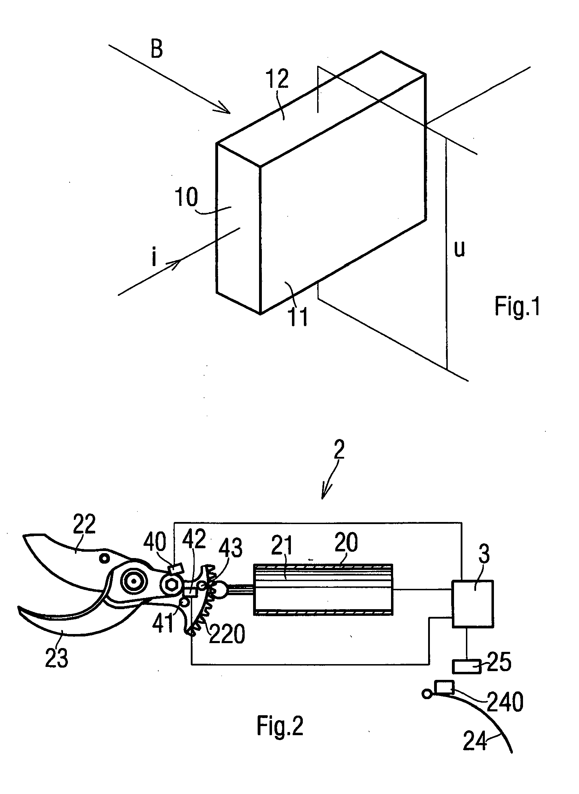

En figure 1 est représenté de manière schématique une cellule 1 à effet Hall. On peut voir que cette cellule sous forme parallélépipédique, présente deux faces opposées d'extrémité 10, deux faces sensibles opposées 11 et deux faces latérales opposées 12. On peut voir que cette cellule 1 est traversée longitudinalement par un courant i entrant dans la cellule par une des faces d'extrémité 10 et sortant de la cellule par l'autre face d'extrémité 10. Cette cellule est plongée dans un champ d'induction magnétique B et est orientée par rapport à ce champ en sorte que les lignes de champ soient sécantes aux faces principales 11. Dans ces conditions, une différence de potentiel électrique ou tension de Hall u apparaît entre les faces latérales 12.

En figure 2 est représenté un outil de coupe tel un sécateur 2 pour la taille de la vigne par exemple. Ce sécateur comprend un bâti auquel est fixé un manche creux 20 dans lequel est logé un motoréducteur électrique 21, par exemple à courant continu, d'actionnement d'une lame mobile 22 montée de manière pivotante sur un axe solidaire du bâti. Une lame fixe 23 ou crochet est fixée à ce bâti. Cet outil de coupe 1 présente en outre une gâchette 24 à partir de l'actionnement de laquelle le motoréducteur 21 est activé par l'intermédiaire d'un circuit de commande électronique 3 pour entraîner la lame de coupe mobile 22 entre sa position de fermeture et sa position d'ouverture et inversement. Le motoréducteur électrique 21 et plus généralement tous les composants électriques et électroniques de l'outil de coupe, sont alimentés en énergie électrique par une source d'énergie externe, non représentée, constituée par exemple par un jeu de batteries électriques montées dans une ceinture, ou autre, portée par l'utilisateur. Cette source d'énergie est connectée à l'outil de coupe par un câble d'alimentation.

Typiquement, la lame mobile 22, à l'opposé de sa zone tranchante, est dotée d'une crémaillère 220 en arc de circonférence de cercle avec laquelle est engrenée un pignon denté en prise avec l'arbre de sortie du motoréducteur électrique 21 par l'intermédiaire d'une transmission de mouvement sous forme de réducteur.

La gâchette 24 est dotée d'un aimant permanent 240 et le sécateur est doté d'un capteur à effet Hall 25 apte à mesurer en continu le champ magnétique de l'aimant et émettre un signal représentatif de la position angulaire instantanée de la gâchette 24. Ce capteur 25 est connecté au circuit de commande 3. Ce dernier est apte à asservir la position angulaire de la lame mobile 22 à la position angulaire de la gâchette 24. Avantageusement ce capteur à effet Hall 25 comprend deux cellules à effet Hall formant un angle entre elles et est apte à donner deux informations de distance telles qu'abscisse et ordonnée, de la position de l'aimant 240 dans un repère cartésien fixe par rapport au capteur à effet Hall. Ces deux informations de distance sont traitées par le circuit de commande 3 pour déterminer l'angle que forme la gâchette 24 par rapport à une position initiale et agir en conséquence sur le motoréducteur 21 afin de positionner la lame mobile 22 dans la position angulaire correspondante. De préférence le circuit de commande 3 établi un rapport entre ces deux valeurs ce qui donne la valeur de la tangente de l'angle que forme la gâchette 24 par rapport à sa position d'origine. Connaissant cette valeur il est alors aisé de déterminer la valeur angulaire correspondante.

Avantageusement, le motoréducteur 21 est commandé en courant par le circuit de commande 3 et ce dernier pilote ledit motoréducteur 21 par l'intermédiaire d'un pilotage par hacheur 30. Ce circuit de commande émet un signal d'alimentation du motoréducteur électrique 21 et est adapté à effectuer une mesure de vitesse du rotor du motoréducteur et par voie de conséquence de la lame mobile, par traitement de ce signal d'alimentation. Par ailleurs, ce circuit de commande 3 est adapté à intégrer cette mesure par rapport au temps afin d'obtenir une distance parcourue et par voie de conséquence la position angulaire de la lame mobile 22 par rapport à la lame fixe. Il est ainsi possible par ce biais d'asservir la position de la lame mobile 22 à la position de la gâchette 24.

Dans la pratique, le circuit de commande 3 outre le hacheur 30 comporte un micro contrôleur 31, un convertisseur analogique-numérique 32 et des modules mémoires non représentés. Le micro contrôleur 31 commande le motoréducteur électrique 21 en courant par l'intermédiaire d'un pilotage par commande du circuit hacheur 30 en fonction du signal qu'il reçoit du capteur à effet Hall 25 associé à la gâchette 24.

Avantageusement, le micro contrôleur 31 effectue une mesure de vitesse du rotor du motoréducteur 21 par traitement du signal d'alimentation du motoréducteur 21, cette mesure de vitesse étant effectuée pendant des intervalles de temps où le courant est nul, dans les périodes de hachage, par mesure de la force contre électromotrice produite par le motoréducteur. La valeur de cette force contre électromotrice est représentative de la vitesse angulaire de rotation du rotor du motoréducteur. En vue de cette mesure, un pont diviseur de tension est relié, en entrée au motoréducteur 21 et en sortie au convertisseur analogique numérique, ce convertisseur étant connecté au micro contrôleur. Dans la pratique, ce diviseur de tension est formé de quatre résistances 33 à 36.

Le micro contrôleur 31 est adapté à intégrer dans le temps la mesure de vitesse afin de déterminer la position instantanée de l'arbre de sortie du motoréducteur 21 et par voie de conséquence la position angulaire instantanée de la lame de coupe mobile 22 par rapport à la lame fixe 23 et est adapté à comparer ladite position avec la valeur de la mesure de la position angulaire de la gâchette 24. En fonction du résultat de cette comparaison, le microcontrôleur 31 effectue une correction du type proportionnel-intégral-dérivé.

Le calcul de la position instantanée de la lame mobile 24 autorise un fonctionnement de l'outil de coupe en mode de demi-ouverture des lames de couple. La position de demi-ouverture est une position intermédiaire entre la position de pleine ouverture et la position de fermeture. Grâce à ce mode de fonctionnement en demi ouverture, l'amplitude du mouvement de la lame mobile 22 se trouve limité et adapté au travail envisagé. En outre, cette disposition conduit à un gain de temps et à une limitation de la consommation électrique. Avantageusement, cette position est paramétrable par l'utilisateur lors d'une phase d'initialisation et est mise en mémoire dans des mémoires du circuit de commande. Le circuit de commande 3, en comparant la position instantanée de la lame mobile, (position calculée par intégration sur le temps de la vitesse de la lame mobile), à la position de demi ouverture mise en mémoire pourra commander l'arrêt du motoréducteur 21 lorsque la position mémorisée sera atteinte. Ainsi l'arrêt de la lame mobile en position de demi-ouverture est obtenu sans butée mécanique ni sans capteur dédié.

Il y a lieu de noter que lorsque la gâchette est en position relâchée la lame mobile, selon le mode de fonctionnement choisi pour l'outil de coupe, est soit en position de demi-ouverture soit en position de pleine ouverture. Il y a lieu de noter aussi que la position de demi-ouverture ne dépend que du choix de l'utilisateur.

De préférence est prévu un commutateur manoeuvrable par l'utilisateur pour commuter le sécateur soit en mode de pleine ouverture soit en mode de demi-ouverture. Ce commutateur est connecté au circuit de commande 3.

Le circuit de commande 3 comporte de plus un premier capteur à effet Hall 40 installé fixement par rapport au bâti du sécateur et par rapport à la lame fixe 23, un premier aimant permanent droit 41 associé fonctionnellement au premier capteur à effet Hall 40, monté sur la lame mobile 22 et matérialisant en combinaison avec ledit capteur une position de fermeture, et un second capteur à effet Hall 42 installé fixement par rapport au bâti du sécateur et par rapport à la lame fixe 23. Ce second capteur est connecté au circuit de commande et est apte à matérialiser avec un second aimant permanent droit 43 porté par la lame mobile 22, une position d'ouverture maximale des deux lames.

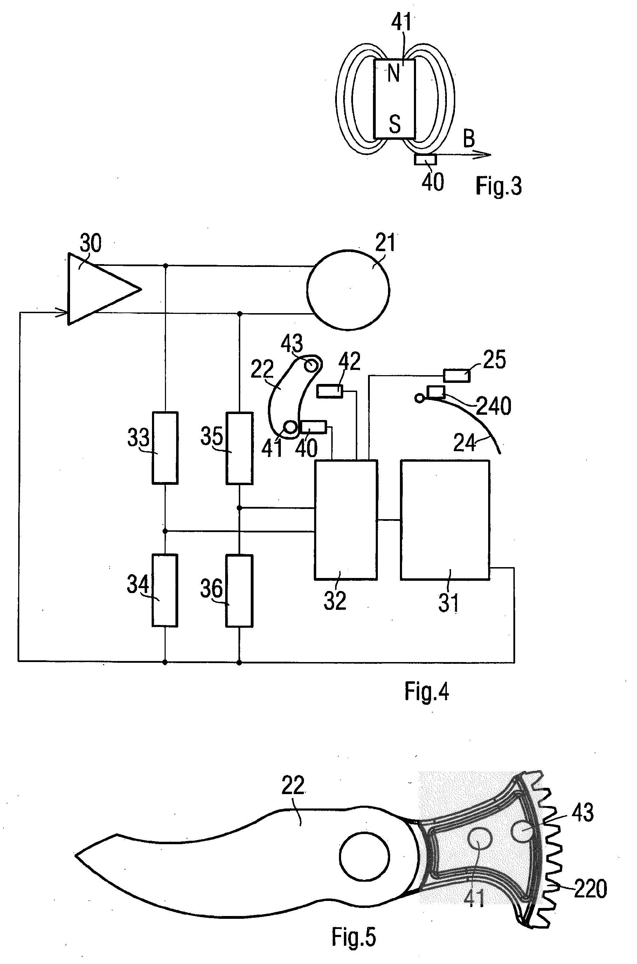

Le premier capteur à effet Hall 40 est apte à donner deux informations de position à savoir abscisse et ordonnée, de l'aimant 41, dans un repère cartésien fixe par rapport audit capteur 40. Ce capteur 40 intègre deux cellules à effet Hall formant un angle entre elles, les dites cellules par leurs surfaces principales étant parallèles à l'axe nord-sud de l'aimant associé. De surcroît le premier aimant 41 est positionné en sorte que son axe nord-sud soit perpendiculaire à sa trajectoire et le premier capteur 40 est disposé dans une zone selon laquelle le vecteur champ magnétique du premier aimant 41 comprend une composante perpendiculaire audit axe nord-sud (Fig. 3), ce premier capteur par ses faces sensibles étant parallèle à l'axe nord-sud de l'aimant associé.

En raison de ces dispositions, le capteur à effet Hall 40, lorsque l'aimant 41 est dans sa zone de sensibilité, est apte à délivrer au circuit de commande deux informations représentatives de la position angulaire de l'aimant 41 dans le repère cartésien sus évoqué. Ainsi il devient possible, par la connaissance précise de cette position angulaire d'ajuster, en position de fermeture des lames, la valeur du croisement angulaire de ces dernières. Ce croisement angulaire selon lequel les fils des deux lames, en position de fermeture, se croisent, permet de compenser l'usure du tranchant de ces dernières. Il y a lieu de noter que le réglage de ce croisement est opéré par l'utilisateur, par la mise en oeuvre d'une procédure adaptée, non décrite ici. La position de croisement est mémorisée dans une mémoire appropriée du circuit de commande.

Avantageusement, le circuit de commande 3 établi un rapport entre les deux valeurs en abscisse et ordonnée ce qui donne indirectement la valeur de la position angulaire de l'aimant 41 dans le repère cartésien, plus précisément ce rapport donne une valeur de tangente.

Il ya lieu de noter que les aimants 41 et 43 sont disposés sur des trajectoires différentes l'une de l'autre de façon que notamment chaque capteur à effet Hall 40, 42 ne puisse pas être influencé par le champ magnétique de l'aimant associé à l'autre capteur. En outre l'axe nord-sud de chacun de ces aimants est parallèle à l'axe de pivotement de la lame 22.

De préférence, ces aimants seront disposés dans des logements appropriés formés dans la crémaillère 220 de la lame mobile 22.

Le second capteur à effet Hall 42 fonctionne avantageusement en tout ou rien.

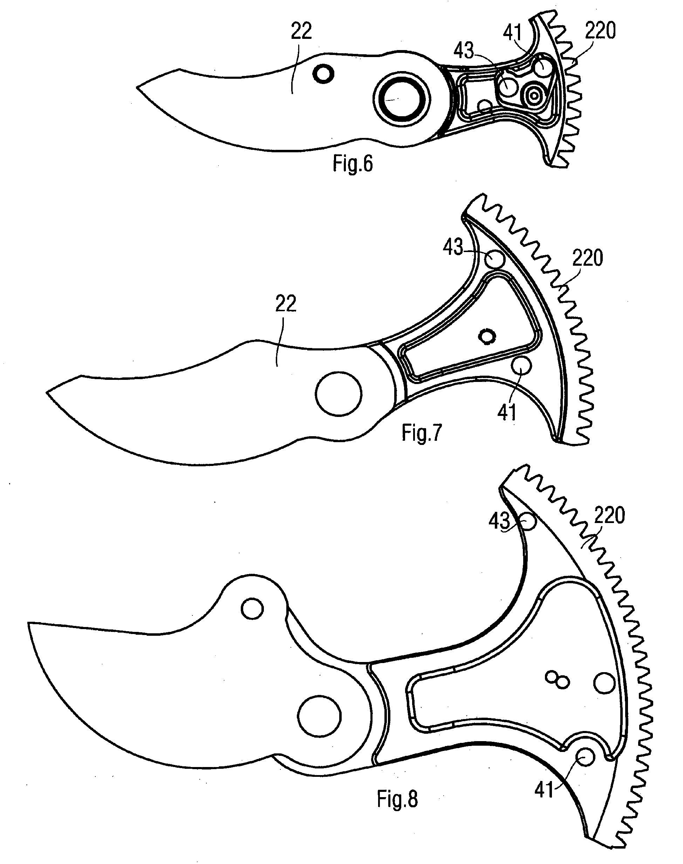

Le sécateur peut recevoir plusieurs types de lame correspondant à des travaux de différentes natures. Ces lames avec leurs crémaillères sont représentées en figures 5 à 8.

Il est nécessaire de pouvoir identifier le type de lame installé sur le sécateur ceci afin que le circuit de commande 3 puisse notamment adapter la course de la lame mobile 22 à la course de la gâchette 24. A cet effet le type de lame est identifié par l'écart angulaire entre les aimants 41 et 43, cet écart étant différent d'un type de lame à l'autre. Le circuit de commande lors de la première coupe mesure la distance parcourue par la lame de coupe entre les positions de pleine ouverture et de fermeture. Cette mesure de distance parcourue permet ainsi d'identifier le type de lame équipant le sécateur.

Le circuit de commande est apte à comptabiliser séparément le nombre total de coupes réalisées et le nombre de coupe ayant conduit à un blocage des lames. Ainsi par traitement statistique et comparaison à des valeurs préétablies inscrites en mémoire, il sera possible de donner une information relative au degré d'usure des lames sachant qu'une usure prononcée conduit quasi systématiquement à un blocage. Ces informations seront stockées en mémoire et traitées par le circuit de commande 3.

Enfin il y a lieu de noter que les capteurs à effet Hall peuvent comprendre des circuits magnétiques adaptés permettant de dévier les champs à mesurer de manière à disposer les cellules sensibles dans un même plan.

## Revendications

1. Dispositif de contrôle positionnel de deux éléments (22, 23) l'un par rapport à l'autre, par exemple les lames d'un outil de coupe du genre sécateur, dont un (23) est fixe et l'autre (22) mobile et connecté mécaniquement à un organe motoréducteur (21) afin d'être entraîné par ce dernier le long d'une trajectoire préétablie, la position dudit organe mobile (22) étant asservie à la position d'un organe de commande (24) tel qu'une gâchette, ledit dispositif comportant un bâti portant l'élément fixe (23), **caractérisé en ce qu'**il comprend un circuit de commande (3) de l'organe motoréducteur (21), un premier capteur à effet Hall fixe (40), connecté au circuit de commande (3), installé fixement par rapport au bâti, apte à matérialiser avec un aimant permanent droit (41), porté par l'élément mobile (22), une position d'écartement nul ou négatif des deux éléments (22, 23) et un second capteur à effet Hall (42), connecté au circuit de commande (3), installé fixement par rapport au bâti, apte à matérialiser avec un aimant permanent droit porté par l'élément mobile (22) une position d'écartement maximal des deux éléments, que l'aimant (41) est positionné en sorte que son axe nord-sud soit perpendiculaire à sa trajectoire, que le premier capteur (40) est disposé dans une zone selon laquelle le vecteur champ magnétique de ce premier aimant présente une composante perpendiculaire audit axe nord-sud, ledit premier capteur (40) par sa face sensible étant parallèle à l'axe nord-sud de l'aimant associé (41) et est apte à donner deux informations de position, à savoir abscisse et ordonnée, de l'aimant (41) associé, dans un repère cartésien fixe par rapport audit capteur et que ce dernier intègre deux cellules à effet Hall formant un angle entre elles, les dites cellules par leurs faces sensibles étant parallèles à l'axe nord-sud de l'aimant associé (41) et que la valeur de l'écartement minimal ou négatif entre l'élément mobile (22) et l'élément fixe (23) est ajustable.

2. Dispositif de contrôle selon la revendication 1, **caractérisé par** deux aimants (41, 43) dont un (43) est fonctionnellement associé au premier capteur à effet Hall (40) et dont l'autre (43) est fonctionnellement associé au second capteur à effet Hall (42), les dits aimants étant portés tous deux par l'élément mobile (22).

3. Dispositif de contrôle selon la revendication précédente, **caractérisé en ce que** les aimants (41) et (43) sont disposés sur des trajectoires différentes de façon que chaque capteur à effet Hall (40, 42) ne puisse pas être influencé par le champ magnétique de l'aimant fonctionnellement associé à l'autre capteur.

4. Dispositif de contrôle selon l'une quelconque des revendications précédentes, **caractérisé en ce que** l'organe de commande (24) porte un aimant (240) déplaçable en regard d'un capteur à effet Hall (25) occupant une position fixe par rapport à l'élément fixe (23), ledit capteur à effet Hall (25) étant connecté au circuit de commande (3) et étant apte à mesurer en continu le champ magnétique de l'aimant (240) et émettre un signal représentatif de la position angulaire instantanée de l'organe de commande (24), ledit circuit de commande (3) étant apte à asservir la position de l'élément mobile (22) à la position de l'organe de commande (24).

5. Dispositif de contrôle selon la revendication précédente, **caractérisé en ce que** le capteur à effet Hall (25) comprend deux cellules à effet Hall formant un angle entre elles et est apte à donner deux informations de distance telles qu'abscisse et ordonnée, de la position de l'aimant (240) dans un repère cartésien fixe par rapport au dit capteur (25).

6. Dispositif de contrôle selon la revendication 4 ou la revendication 5, **caractérisé en ce que** le motoréducteur (21) est commandé en courant par le circuit de commande (3) et que ledit circuit pilote ledit motoréducteur (21) par l'intermédiaire d'un pilotage par hacheur (30).

7. Dispositif de contrôle selon l'une quelconque des revendications 4 à 6, **caractérisé en ce que** le circuit de commande (3) émet un signal d'alimentation du motoréducteur électrique (21) et est adapté à effectuer une mesure de vitesse du motoréducteur (21) par traitement de ce signal d'alimentation.

8. Dispositif de contrôle selon la revendication précédente, **caractérisé en ce que** le circuit de commande (3) est apte à intégrer la mesure de vitesse par rapport au temps afin d'obtenir une distance parcourue et par voie de conséquence la position de l'élément mobile (22) par rapport à l'élément fixe (23).

9. Dispositif de contrôle selon la revendication précédente, **caractérisé en ce que** le circuit de commande (3) est adapté à comparer la dite position instantanée avec une valeur de consigne qui dépend du signal délivré par le capteur à effet Hall associé à l'organe de commande.

10. Outil de coupe électroportatif comportant une lame de coupe fixe (23), une lame de coupe mobile (22) actionnée par un motoréducteur électrique (21) à partir de l'action sur une gâchette (24), **caractérisé en ce qu'**il comprend un dispositif de contrôle selon l'une quelconque des revendications précédentes.

11. Outil de coupe selon la revendication précédente, **caractérisé en ce que** la lame mobile (22) comprend une crémaillère (220) et que les aimants (41, 43) sont portés par la crémaillère.

12. Outil de coupe selon la revendication 10 ou la revendication 11, **caractérisé en ce que** le circuit de commande (3) est apte à détecter le type de lame par mesure de l'amplitude du mouvement de la lame mobile entre sa position de pleine ouverture et sa position de fermeture lors de la première coupe, l'écart angulaire entre les deux aimants (41, 43) étant significatif du type de lame utilisé.

13. Outil de coupe selon l'une quelconque des revendications 10 à 12, **caractérisé par** une position de demi-ouverture de lame (22) paramétrable, ladite position étant définie lors d'une phase d'initialisation et étant mémorisée et comparée par le circuit de contrôle (3) à la position calculée de la lame mobile (22), ledit circuit (3) commandant l'arrêt du motoréducteur (21) lorsque la position de demi-ouverture est atteinte.

14. Outil de coupe selon l'une quelconque des revendications 10 à 13, **caractérisé en ce que** le circuit de commande (3) est apte à comptabiliser séparément le nombre total de coupes réalisées et le nombre de coupe ayant conduit à un blocage des lames et à traiter statistiquement ces deux valeurs pour donner une information relative au degré d'usure des lames.

## Patentansprüche

1. Vorrichtung zur Steuerung der Positionierung von zwei Elementen (22, 23), beispielsweise den Klingen eines Schneidwerkzeugs vom Rosenscherentyp, zueinander, wobei eine (23) fest und die andere (22) beweglich und mechanisch an ein Getriebemotorelement (21) angeschlossen ist, um von diesem letztgenannten entlang einer vordefinierten Bahn angetrieben zu werden, wobei die Position des beweglichen Elements (22) in die Position eines Steuerelements (24), wie eines Drückers, gesteuert wird, wobei die Vorrichtung ein Gehäuse umfasst, das das feste Element (23) trägt, **dadurch gekennzeichnet, dass** sie eine Steuerschaltung (3) des Getriebemotorelements (21), einen ersten festen Hall-Effekt-Sensor (40), der an die Steuerschaltung (3) angeschlossen und fest in Bezug zum Gehäuse installiert und geeignet ist, mit einem graden Dauermagneten (41), der von dem beweglichen Element (22) getragen wird, eine Position mit einem Abstand gleich Null oder einem negativen Abstand der beiden Elemente (22, 23) zu verwirklichen, und einen zweiten Hall-Effekt-Sensor (42) umfasst, der an die Steuerschaltung (3) angeschlossen ist und fest in Bezug zu dem Gehäuse installiert und geeignet ist, mit einem geraden Dauermagneten, der von dem beweglichen Element (22) getragen wird, eine Position des maximalen Abstands der beiden Elemente zu verwirklichen, dass der Magnet (41) derart positioniert ist, dass seine Nord-Süd-Achse auf seine Bahn senkrecht ist, dass der erste Sensor (40) in einer Zone angeordnet ist, entlang der der Magnetfeldvektor dieses ersten Magneten eine Komponente senkrecht auf die Nord-Süd-Achse aufweist, wobei der erste Sensor (40) mit seiner sensiblen Seite zur Nord-Süd-Achse des zugehörigen Magneten (41) parallel und geeignet ist, zwei Positionsinformationen, nämlich auf der Abszisse und auf der Ordinate, des zugehörigen Magneten (41) in einem kartesischen Bezugssystem, das in Bezug zum Sensor fest ist, zu geben, und dass dieser letztgenannte zwei Hall-Effekt-Zellen integriert, die zwischen sich einen Winkel bilden, wobei die Zellen mit ihren sensiblen Seiten zur Nord-Süd-Achse des zugehörigen Magneten (41) parallel sind, und dass der Wert des minimalen oder negativen Abstands zwischen dem beweglichen Element (22) und dem festen Element (23) einstellbar ist.

2. Steuervorrichtung nach Anspruch 1, **gekennzeichnet durch** zwei Magneten (41, 43), von denen einer (43) funktionell mit dem ersten Hall-Effekt-Sensor (40) verbunden ist, und der andere (43) funktionell mit dem zweiten Hall-Effekt-Sensor (42) verbunden ist, wobei die Magneten beide von dem beweglichen Element (22) getragen werden.

3. Steuervorrichtung nach dem vorhergehenden Anspruch, **dadurch gekennzeichnet, dass** die Magneten (41) und (43) auf unterschiedlichen Bahnen angeordnet sind, so dass jeder Hall-Effekt-Sensor (40, 42) nicht von dem Magnetfeld des mit dem anderen Sensor funktionell verbundenen Magneten beeinflusst werden kann.

4. Steuervorrichtung nach einem der vorhergehenden Ansprüche, **dadurch gekennzeichnet, dass** das Steuerelement (24) einen Magneten (240) trägt, der gegenüber einem Hall-Effekt-Sensor (25), der eine feste Position in Bezug zu dem festen Element (23) einnimmt, verschiebbar ist, wobei der Hall-Effekt-Sensor (25) an die Steuerschaltung (3) angeschlossen und geeignet ist, kontinuierlich das Magnetfeld des Magneten (240) zu messen und ein Signal, das für die momentane Winkelposition des Steuerelements (24) repräsentativ ist, zu entsenden, wobei die Steuerschaltung (3) geeignet ist, die Position des beweglichen Elements (22) in die Position des Steuerelements (24) zu steuern.

5. Steuervorrichtung nach dem vorhergehenden Anspruch, **dadurch gekennzeichnet, dass** der Hall-Effekt-Sensor (25) zwei Hall-Effekt-Zellen umfasst, die zwischen sich einen Winkel bilden, und geeignet ist, zwei Abstandsinformationen, auf der Abszisse und auf der Ordinate, der Position des Magneten (240) in einem kartesischen Bezugssystem, das in Bezug zum Sensor (25) fest ist, zu geben.

6. Steuervorrichtung nach Anspruch 4 oder Anspruch 5, **dadurch gekennzeichnet, dass** der Getriebemotor (21) laufend von der Steuerschaltung (3) gesteuert wird, und dass die Schaltung den Getriebemotor (21) mit Hilfe einer Zerhackersteuerung (30) steuert.

7. Steuervorrichtung nach einem der Ansprüche 4 bis 6, **dadurch gekennzeichnet, dass** die Steuerschaltung (3) ein Versorgungssignal des elektrischen Getriebemotor (21) entsendet und geeignet ist, eine Geschwindigkeitsmessung des Getriebemotors (21) durch Bearbeitung dieses Versorgungssignals durchzuführen.

8. Steuervorrichtung nach dem vorhergehenden Anspruch, **dadurch gekennzeichnet, dass** die Steuerschaltung (3) geeignet ist, die Geschwindigkeitsmessung in Bezug zur Zeit zu integrieren, um eine durchlaufene Distanz und folglich die Position des beweglichen Elements (22) in Bezug zum festen Element (23) zu erhalten.

9. Steuervorrichtung nach dem vorhergehenden Anspruch, **dadurch gekennzeichnet, dass** die Steuerschaltung (3) dazu vorgesehen ist, die momentane Position mit einem Sollwert zu vergleichen, der von dem Signal abhängt, das vom Hall-Effekt-sensor, der dem Steuerelement zugeordnet ist, abhängt.

10. Tragbares elektrisches Schneidwerkzeug, umfassend eine feste Schneidklinge (23), eine bewegliche Schneidklinge (22), die von einem elektrischen Getriebemotor (21) nach Betätigung eines Drückers (24) betätigt wird, **dadurch gekennzeichnet, dass** es eine Steuervorrichtung nach einem der vorhergehenden Ansprüche umfasst.

11. Schneidwerkzeug nach dem vorhergehenden Anspruch, **dadurch gekennzeichnet, dass** die bewegliche Klinge (22) eine Zahnstange (220) umfasst, und dass die Magneten (41, 43) von der Zahnstange getragen werden.

12. Schneidwerkzeug nach Anspruch 10 oder Anspruch 11, **dadurch gekennzeichnet, dass** die Steuerschaltung (3) geeignet ist, den Klingentyp durch Messen der Amplitude der Bewegung der beweglichen Klinge zwischen ihrer Position der vollen Öffnung und ihrer Verschlussposition beim ersten Schneiden zu erkennen, wobei der Winkelabstand zwischen den beiden Magneten (41, 43) für den verwendeten Klingentyp signifikant ist.

13. Schneidwerkzeug nach einem der Ansprüche 10 bis 12, **gekennzeichnet, durch** eine parametrierbare halbe Klingenöffnungsposition (22), wobei die Position in einer Initialisierungsphase definiert und gespeichert und **durch** die Steuerschaltung (3) mit der berechneten Position der beweglichen Klinge (22) verglichen wird, wobei die Schaltung (3) das Anhalten des Getriebemotors (21) steuert, wenn die halbe Öffnungsposition erreicht ist.

14. Schneidwerkzeug nach einem der Ansprüche 10 bis 13, **dadurch gekennzeichnet, dass** die Steuerschaltung (3) geeignet ist, die Gesamtzahl von durchgeführten Schnitten und die Schnittanzahl, die zu einer Blockierung der Klingen geführt hat, getrennt zu verbuchen und statistisch diese beiden Werte zu bearbeiten, um eine Information über den Verschleißgrad der Klingen zu geben.

## Claims

1. Device for controlling the positioning of two elements in relation to one another, for example the blades of a cutting tool of the secateur type, one of which is stationary and the other mobile and connected mechanically to a geared motor element so as to be driven by the latter along a preestablished path, the position of said mobile element being slaved to the position of a control element such as a trigger, said device comprising a frame fastening the stationary element, **characterized in that** the device comprising a circuit for controlling the geared motor element, a stationary first Hall effect sensor, connected to the control circuit, installed in a stationary way in relation to the frame of the device, able to indicate with a permanent bar magnet, carried by the mobile element, a zero or negative gap position of the two elements, and a second Hall effect sensor, connected to the control circuit, installed in a stationary way in relation to the frame of the device, able to indicate with a permanent bar magnet carried by the mobile element a maximum gap position of the two elements, **in that** the magnet is positioned so that its north-south axis is perpendicular to its path, and **in that** the first sensor is placed in an area in which the magnetic field vector of this first magnet exhibits a component perpendicular to said north-south axis, the sensitive face of said first sensor being parallel to the north-south axis of the corresponding magnet and the first sensor is able to provide two pieces of position information, namely abscissa and ordinate, of the corresponding magnet, in a Cartesian reference that is stationary in relation to said sensor, and wherein the latter incorporates two Hall effect cells forming an angle between them, the sensitive surfaces of said cells being parallel to the north-south axis of the corresponding magnet, the value of the minimum or negative gap between the mobile element and the stationary element is adjustable

2. Control device according to Claim 1, **characterized by** two magnets (41, 43), one (43) of which is functionally associated with the first Hall effect sensor (40) and the other (43) of which is functionally associated with the second Hall effect sensor (42), said magnets both being carried by the mobile element (22).

3. Control device according to the preceding claim, wherein the magnets (41) and (43) are placed on different paths so that each Hall effect sensor (40, 42) cannot be influenced by the magnetic field of the magnet that is functionally associated with the other sensor.

4. Control device according to any one of the preceding claims, wherein the control element (24) carries a movable magnet (240) opposite a Hall effect sensor (25) occupying a stationary position in relation to the stationary element (23), said Hall effect sensor (25) being connected to the control circuit (3) and being able to measure continuously the magnetic field of the magnet (240) and to send a signal that is representative of the instantaneous angular position of the control element (24), said control circuit (3) being able to slave the position of the mobile element (22) to the position of the control element (24).

5. Control device according to the preceding claim, wherein the Hall effect sensor (25) comprises two Hall effect cells forming an angle between them and is able to provide two pieces of distance information, such as abscissa and ordinate, of the position of the magnet (240) in a Cartesian reference that is stationary in relation to said sensor (25).

6. Control device according to Claim 4 or Claim 5, wherein the geared motor (21) is current-controlled by the control circuit (3) and wherein said circuit drives said geared motor (21) by a chopper drive (30).

7. Control device according to any one of Claims 4 to 6, wherein the control circuit (3) sends a power supply signal from the electric geared motor (21) and is adapted to perform a measurement of speed of the geared motor (21) by processing this power supply signal.

8. Control device according to the preceding claim, wherein the control circuit (3) is able to incorporate the measurement of speed in relation to time to obtain a distance travelled and consequently the position of the mobile element (22) in relation to the stationary element (23).

9. Control device according to the preceding claim, wherein the control circuit (3) is adapted to compare said instantaneous position with an instruction value that depends on the signal delivered by the Hall effect sensor associated with the control element.

10. Electric portable cutting tool comprising a stationary cutting blade (23) and a mobile cutting blade (22) actuated by an electric geared motor (21) from the action on a trigger (24), wherein it comprises a control device according to any one of the preceding claims.

11. Cutting tool according to the preceding claim, wherein the mobile blade (22) comprises a rack (220) and wherein the magnets (41, 43) are carried by the rack.

12. Cutting tool according to Claim 10 or Claim 11, wherein the control circuit (3) is able to detect the type of blade by measuring the amplitude of the movement of the mobile blade between its full open position and its closed position during the first cutting, the angular gap between the two magnets (41, 43) signifying the type of blade used.

13. Cutting tool according to any one of Claims 10 to 12, **characterized by** a semi-open position of blade (22), which is able to have its parameters set, said position being defined during an initialization phase and being stored and compared by the control circuit (3) to the calculated position of the mobile blade (22), said circuit (3) controlling the stopping of the geared motor (21) when the semi-open position is reached.

14. Cutting tool according to any one of Claims 10 to 13, wherein the control circuit (3) is able to count separately the total number of cuttings performed and the cutting number that has led to a locking of the blades and statistically to process these two values to provide an item of information related to the degree of wear of the blades.
